# EUROPÄISCHE PATENTSCHRIFT

(11) **EP 3 996 855 B1**
(45) Veröffentlichungstag und Bekanntmachung des Hinweises auf die Patenterteilung: **30.08.2023**
(21) Anmeldenummer: 20757514.3
(22) Anmeldetag: 09.07.2020
(51) Int. Cl.: B21D 5/00, B21D 5/02, B21D 5/04, G05B 19/409

(54) **POSITIONIERVERFAHREN EINER BEDIENVORRICHTUNG BEZÜGLICH EINER BIEGEMASCHINE**
METHOD FOR POSITIONING AN OPERATING APPARATUS IN RESPECT OF A BENDING MACHINE
PROCÉDÉ DE POSITIONNEMENT D'UN DISPOSITIF D'ACTIONNEMENT PAR RAPPORT À UNE MACHINE DE CINTRAGE

(30) Priorität: 10.07.2019 AT 506312019
(43) Veröffentlichungstag der Anmeldung: 18.05.2022
(73) Patentinhaber: TRUMPF Maschinen Austria GmbH & Co. KG., 4061 Pasching (AT)
(72) Erfinder: ECKL, Dominik, 4671 Neukirchen bei Lambach (AT)
(74) Vertreter: Burger, Hannes
(86) Internationale Anmeldenummer: PCT/AT2020/060267
(87) Internationale Veröffentlichungsnummer: WO 2021/003512

(56) Entgegenhaltungen:
- EP-A1- 1 747 825
- WO-A1-2007/062441
- FR-A1- 2 739 316
- US-A- 4 831 862
- US-A- 5 586 465

## Beschreibung

Die Erfindung betrifft ein Verfahren zur relativen Positionierung zumindest einer Bedienvorrichtung bezüglich einer Biegemaschine innerhalb vorbestimmter Grenzen einer Arbeitsfläche.

Die WO 2007/062441 A1 beschreibt eine als Fußschalter ausgebildete Schaltvorrichtung für eine Fertigungseinrichtung. Die Schaltvorrichtung ist zur Signal- und/oder Datenübertragung bevorzugt drahtlos mit einer Steuervorrichtung der Fertigungseinrichtung, insbesondere einer Abkantpresse, verbunden. Zur bedarfsweisen Positionsveränderung ist eine Positioniereinrichtung vorgesehen, welche zumindest durch eine Erfassungseinrichtung und eine Fortbewegungseinrichtung gebildet ist. Die Fortbewegungseinrichtung ist durch ein mit einer Antriebseinrichtung und zumindest einem Fortbewegungselement versehenes Fahrgestell gebildet. Die Bedienperson definiert mit ihrem Fuß die Soll-Position für die Schaltvorrichtung und kann ein detektierbares Element tragen, welches im oder am Schuh angeordnet ist. Bei einer Positionsänderung des Fußes wird dies von der Erfassungseinrichtung wahrgenommen und anschließend wird von der Erfassungseinrichtung ein für die Position bzw. der Positionsveränderung des Fußes repräsentatives Signal an die Steuereinrichtung übermittelt. Die Steuereinrichtung wertet dieses Signal aus und generiert anschließend ein Steuersignal, welches an die Fortbewegungseinrichtung übermittelt wird, welche die Positionsveränderung der Schaltvorrichtung vornimmt. Die Fortbewegungseinrichtung wird durch die Steuereinrichtung solange angesteuert, bis die Schaltvorrichtung in einer vorbestimmten Distanz zur neuen Position angeordnet ist.

Gemäß der US 7,802,456 B2 und der in dieser zitierten JP 2005-319515 A und der daraus hervorgegangenen EP 1747825 B1 ist es bekannt, für die Bedienung und Steuerung des Biegevorgangs an einer Biegemaschine einen in Richtung der Längserstreckung des Biegebereichs in paralleler Richtung dazu mittels einer Verstellvorrichtung einen entlang einer fixen Führungsanordnung verlagerbaren Fußschalter vorzusehen. Der Fußschalter wurde entlang der geradlinig ausgerichteten Führungsanordnung mittels eines Verstellantriebs an die jeweils vorbestimmte Soll-Position verbracht. Nachteilig dabei war die räumliche Begrenztheit der Anordnungsmöglichkeiten des Fußschalters relativ bezüglich der Biegemaschine.

Die JP 3744593 B2 beschreibt einen Fußschalter zur Betätigung einer Biegepresse, welcher bezüglich der Biegepresse mobil ist. Beidseits des Maschinenrahmens ist jeweils ein Stellzylinder vorgesehen, wobei an dessen Enden eine Gewindespindel drehbar gelagert ist. An der Gewindespindel ist der Fußschalter zu dessen Längsverstellung angeordnet. Durch eine kombinierte Bewegung der Stellzylinder und der Gewindespindel kann in den vorgegebenen mechanischen Grenzen die Verlagerung des Fußschalters durchgeführt werden.

Die FR 2739316 B1 beschreibt eine Steuerungsvorrichtung mit Hand- und Fußsteuerungspedalen. Weiters ist eine Kopplungsvorrichtung zwischen einer Führungseinrichtung und der Steuerungsvorrichtung vorgesehen. Die Kopplungseinrichtung ist derart ausgebildet, dass die Steuerungsvorrichtung zwischen einer Position, in der es an der Werkzeugmaschine befestigt ist, und einer Position, in der es von der Werkzeugmaschine unabhängig ist, bewegbar ist. Die Steuerungsvorrichtung umfasst eigene Rollen, auf denen eine manuelle Verstellbewegung von einer Bedienperson durchgeführt werden kann.

Die US 5,586,465 A beschreibt ein programmierbares System, um die Bedienelemente der Biegemaschine gemäß eines Zeitplans oder mittels ansprechender Signale des Maschinenbedieners an vorbestimmten Positionen automatisch zu positionieren. Der Bediener kann sich so an einer Mehrfach-Bearbeitungsanlage von Station zu Station bewegen, wobei die Bedienelemente an jeder der Stationen optimal positioniert sind. Die Verstellbewegungen erfolgen an geradlinigen Führungsanordnungen.

Aufgabe der vorliegenden Erfindung war es, die Nachteile des Standes der Technik zu überwinden und ein Positionierverfahren zur Verfügung zu stellen, mittels dem eine Bedienperson der Biegemaschine in der Lage ist, je nach durchzuführendem Biegevorgang die Bedienvorrichtung innerhalb einer festgelegten und vorbestimmten Arbeitsfläche an der für ihn optimalsten Soll-Position für die Bedienung der Biegemaschine bereitgestellt zu bekommen.

Diese Aufgabe wird durch ein Verfahren gemäß den Ansprüchen gelöst.

Das Positionierverfahren dient zur relativen Positionierung zumindest einer Bedienvorrichtung bezüglich einer Biegemaschine, wobei die Bedienvorrichtung zur Eingabe von Signalen, insbesondere von Bedienbefehlen, an die Biegemaschine einer Fertigungsanlage zum Biegen von einem aus einem Blech zu fertigenden Werkstück ausgebildet ist, wobei bei dem Verfahren folgende Schritte durchgeführt werden:
- Bereitstellen der zumindest einen Bedienvorrichtung und Vorsehen einer Bedien-Eingabeeinheit, eines Fahrantriebs, einer Bedien-Steuerungseinheit sowie einer ersten Kommunikationsschnittstelle an der zumindest einen Bedienvorrichtung,
- Bereitstellen der Biegemaschine mit einer Biegemaschinen-Steuerungseinheit und einer zweiten Kommunikationsschnittstelle an der Biegemaschine, wobei die erste Kommunikationsschnittstelle an der zumindest einen Bedienvorrichtung mit der zweiten Kommunikationsschnittstelle zur Übermittlung von Signalen in Kommunikationsverbindung steht,
- Festlegen einer Arbeitsfläche mit vorgegebenen Grenzen für die Bedienvorrichtung, innerhalb welcher Grenzen der Arbeitsfläche die zumindest eine Bedienvorrichtung verlagerbar ist, wobei die Arbeitsfläche von einer ebenen und eine horizontale Ausrichtung aufweisenden Aufstandsfläche definiert wird, und wobei weiters noch vorgesehen ist
- dass die aktuelle Ist-Position der zumindest einen Bedienvorrichtung innerhalb der Arbeitsfläche ermittelt wird,
- dass eine Soll-Position der Bedienvorrichtung auf Basis des in der Biegemaschinen-Steuerungseinheit hinterlegten aktuellen Arbeitsprogramms für das zu bearbeitende Blech oder das Werkstück berechnet wird,
- dass die berechnete Soll-Position für die Bedienvorrichtung mittels der zweiten Kommunikationsschnittstelle via der ersten Kommunikationsschnittstelle an die Bedien-Steuerungseinheit der Bedienvorrichtung übermittelt wird,
- dass ein Soll-Verfahrweg der zumindest einen Bedienvorrichtung ausgehend von deren aktuellen Ist-Position zu der Soll-Position ermittelt wird,
- dass ein Fahrbefehl generiert wird und der Fahrbefehl an den Fahrantrieb der Bedienvorrichtung übermittelt wird,
- dass die Bedienvorrichtung mittels des Fahrantriebs entlang des ermittelten Soll-Verfahrwegs selbsttätig und autonom verlagert wird,
- dass an der Bedienvorrichtung zumindest eine Sensoreinheit vorgesehen ist, wobei während der Verfahrbewegung der Bedienvorrichtung entlang des ermittelten Soll-Verfahrwegs von der Bedienvorrichtung ein Fahrstreifen definiert wird, und mittels welcher Sensoreinheit während der Verfahrbewegung ein in den definierten Fahrstreifen hineinragender Gegenstand erfasst wird und weiters von der Bedien-Steuerungseinheit und/oder der Biegemaschinen-Steuerungseinheit ein Korrektur-Verfahrweg um den erfassten Gegenstand herum hin zur Soll-Position ermittelt wird, um eine kollisionsfreie Verfahrbewegung zu erzielen, und
- dass die Bedienvorrichtung an der Soll-Position positioniert abgestellt wird.

Vorteilhaft ist bei den hier gewählten Verfahrensschritten, dass so stets die Bedienvorrichtung selbsttätig und autonom nach der Ermittlung des Soll-Verfahrwegs für die Bedienperson an die dafür optimale Position verbracht wird und dieser so stets für den jeweiligen Biegevorgang zur Verfügung steht. Durch die autonome Verfahrbewegung ist die Bedienperson nicht mit unnötigen Verlagerungsschritten der Bedienvorrichtung beschäftigt. Weiters stehen stets beide Hände der Bedienperson für anderwärtige Tätigkeiten frei zur Verfügung. Damit wird durch die in zwei Raumrichtungen ermöglichte Verstellbewegung auch eine vom Maschinengestell davon distanzierte Soll-Position geschaffen. So wird die Bedienerfreundlichkeit zusätzlich erhöht, da ein zusätzlicher Freiheitsgrad aufgrund der Arbeitsfläche für die Anordnung der Bedienvorrichtung zur Verfügung steht. Weiters wird damit aber auch die Bedienbarkeit des zu biegenden Blechs für die Bedienperson erleichtert, da sich diese nicht im unmittelbaren Nahbereich an der Biegemaschine befinden muss, um die Biegevorgänge einleiten und durchführen zu können.

Weiters ist vorgesehen, dass die Soll-Position der Bedienvorrichtung auf Basis des in der Biegemaschinen-Steuerungseinheit hinterlegten aktuellen Arbeitsprogramms für das zu bearbeitende Blech oder das Werkstück berechnet wird und die berechnete Soll-Position mittels der zweiten Kommunikationsschnittstelle an die erste Kommunikationsschnittstelle der Bedienvorrichtung übermittelt wird. Damit wird auf vorhandene Datensätze aus dem aktuell hinterlegten Arbeitsprogramm für die Positionierung der Bedienvorrichtung zurückgegriffen.

Es ist auch noch an der Bedienvorrichtung zumindest eine Sensoreinheit vorgesehen, wobei während der Verfahrbewegung der Bedienvorrichtung entlang des ermittelten Soll-Verfahrwegs von der Bedienvorrichtung ein Fahrstreifen definiert wird, und mittels welcher Sensoreinheit während der Verfahrbewegung ein in den definierten Fahrstreifen hineinragender Gegenstand erfasst wird und weiters von der Bedien-Steuerungseinheit und/oder der Biegemaschinen-Steuerungseinheit ein Korrektur-Verfahrweg um den erfassten Gegenstand herum hin zur Soll-Position ermittelt wird, um eine kollisionsfreie Verfahrbewegung zu erzielen. Damit werden ungewollte Kollisionen mit sich auf der Arbeitsfläche befindlichen Gegenständen, wie beispielsweise Palletten, Werkstücke oder Grundmaterialien, verhindert. Aufgrund der vorgesehenen Sensoreinheit wird so im Zusammenwirken mit der Bedien-Steuerungseinheit und/oder der Biegemaschinen-Steuerungseinheit ein vom Soll-Verfahrweg abweichender jedoch kollisionsfreier Korrektur-Verfahrweg berechnet. Die Verstellbewegung erfolgt dann ebenfalls autonom entlang des Korrektur-Verfahrwegs, wobei stets eine weitere Korrektur desselben aufgrund von weiteren Gegenständen möglich und denkbar ist.

Weiters ist ein Vorgehen vorteilhaft, bei dem direkt an der Bedienvorrichtung eine Eingabeeinheit vorgesehen ist, wobei die Eingabeeinheit mit der ersten Kommunikationsschnittstelle in Kommunikationsverbindung steht und die Soll-Position von der Eingabeeinheit via der ersten Kommunikationsschnittstelle an die Bedien-Steuerungseinheit der Bedienvorrichtung übermittelt wird. Durch das Vorsehen einer eigenen Eingabeeinheit direkt an der Bedienvorrichtung wird so für die Bedienperson die Möglichkeit geschaffen, Daten für die Ermittlung und/oder Berechnung der Soll-Position für den durchzuführenden Biegevorgang direkt an der Bedienvorrichtung eingeben und/oder erfassen zu können.

Eine weitere vorteilhafte Vorgehensweise ist dadurch gekennzeichnet, dass die Eingabeeinheit zumindest ein Erfassungsmittel umfasst und die Soll-Position vom zumindest einen Erfassungsmittel erfasst wird und der Eingabeeinheit bereitgestellt wird. Durch das Vorsehen eines Erfassungsmittels kann so auf eine händische oder manuelle Eingabe verzichtet werden. So wäre es beispielsweise möglich, das Erfassungsmittel als elektronische und/oder optische Lesevorrichtung auszubilden und damit die erforderlichen Daten für die nachfolgende Ermittlung und Bestimmung der Soll-Position der Bedienvorrichtung einfacher einlesen zu können.

Vorteilhaft ist auch eine Verfahrensvariante, bei welcher die Eingabeeinheit ein Eingabemittel umfasst und die Soll-Position manuell am Eingabemittel eingegeben wird und der Eingabeeinheit bereitgestellt wird. Damit wird die Möglichkeit geschaffen, auch eine manuelle Eingabe von Daten an der Eingabeeinheit durchführen zu können.

Weiters ist ein Vorgehen vorteilhaft, bei dem von einer Erfassungsvorrichtung eine weitere Ist-Position einer Bedienperson der Biegemaschine ermittelt wird und auf Basis der ermittelten Ist-Position der Bedienperson mittels der Biegemaschinen-Steuerungseinheit die Soll-Position für die Bedienvorrichtung berechnet oder ermittelt wird und die Soll-Position von der zweiten Kommunikationsschnittstelle an die erste Kommunikationsschnittstelle übermittelt wird. Durch das Vorsehen einer eigenen Erfassungsvorrichtung kann so aufgrund der ermittelten aktuellen Ist-Position der Bedienperson die Soll-Position für die Bedienvorrichtung ermittelt oder errechnet werden. Damit wird aber auch bei einer Ortsveränderung der Bedienperson dieser Ortswechsel von der Erfassungsvorrichtung erkannt und die Bedienvorrichtung kann damit rasch und sicher an die neue Soll-Position nachgeführt werden.

Eine weitere vorteilhafte Vorgehensweise ist dadurch gekennzeichnet, dass eine Positions-Signalisierungseinheit an einer Bedienperson angeordnet ist und von der Positions-Signalisierungseinheit auf Basis der aktuellen Ist-Position der Bedienperson innerhalb der Arbeitsfläche die Soll-Position für die Bedienvorrichtung ermittelt wird und die Soll-Position an die erste Kommunikationsschnittstelle der Bedienvorrichtung übermittelt wird. Mittels der Positions-Signalisierungseinheit, welche sich direkt an der Bedienperson befindet, kann so auch einfach die Ist-Position der Bedienperson ermittelt oder erfasst werden und basierend auf dieser Positionsinformation wiederum die Bedienvorrichtung an die dafür vorgesehene Soll-Position verlagert werden.

Vorteilhaft ist auch eine Verfahrensvariante, bei welcher die ermittelte Soll-Position direkt von der Positions-Signalisierungseinheit an die erste Kommunikationsschnittstelle der Bedienvorrichtung übermittelt wird. Damit kann auf kürzestem Wege eine Kommunikationsverbindung aufgebaut und damit verbunden ein Datenaustausch zwischen der Position-Signalisierungseinheit und der Bedienvorrichtung erfolgen.

Eine andere Vorgehensweise zeichnet sich dadurch aus, wenn eine Positions-Ortungseinheit mit einem ersten Ortungsmittel an einer Bedienperson und einem zweiten Ortungsmittel an der Bedienvorrichtung vorgesehen wird und vor Erreichen der Soll-Position oder bei Erreichen der Soll-Position die Bedien-Eingabeeinheit der Bedienvorrichtung hin in Richtung auf das erste Ortungsmittel der Bedienperson ausgerichtet wird. Ist eine Positions-Ortungseinheit zwischen der Bedienperson und der Bedienvorrichtung vorgesehen, kann so aufgrund der zusammenwirkenden Ortungsmittel eine gegenseitige positionierte Ausrichtung zwischen der Bedienperson und der Bedienvorrichtung geschaffen werden. Damit kann stets eine zueinander orientierte Ausrichtung, insbesondere der Bedien-Eingabeeinheit und zumindest einer Fußspitze des Fußes der Bedienperson, erzielt werden.

Weiters ist ein Vorgehen vorteilhaft, bei dem sich die Arbeitsfläche für die Bedienvorrichtung in einem Frontbereich vor der Biegemaschine befindet und die Grenzen der Arbeitsfläche in der Biegemaschinen-Steuerungseinheit hinterlegt sind. Damit kann für jede der Biegemaschinen eine eigene dafür vorgesehene Arbeitsfläche definiert werden. Weiters kann aber auch auf den Aufstellungsort der Biegemaschine sowie auf die räumliche Umgebung und die damit verbundenen Platzverhältnisse Bedacht genommen werden.

Eine weitere vorteilhafte Vorgehensweise ist dadurch gekennzeichnet, dass die Arbeitsfläche für die Bedienvorrichtung durch ein sich in X-Richtung und Z-Richtung erstreckendes Koordinatensystem definiert ist. Damit kann eine eindeutige Positionsbestimmung und Festlegung von Koordinaten für die jeweiligen Ist-Positionen und Soll-Positionen ermöglicht werden.

Vorteilhaft ist auch eine Verfahrensvariante, bei welcher eine Grenze der Arbeitsfläche von einem Maschinengestell der Biegemaschine in dessen Längserstreckung in Z-Richtung definiert wird. Damit kann eine ungewollte Kollision der Bedienvorrichtung mit dem Maschinengestell der Biegemaschine verhindert werden.

Eine andere Vorgehensweise zeichnet sich dadurch aus, wenn die Arbeitsfläche von einer ebenen und eine horizontale Ausrichtung aufweisenden Aufstandsfläche definiert wird. Damit kann auf vorhandene Gebäudeteile zurückgegriffen werden, welche für die Definition der Arbeitsfläche herangezogen werden.

Eine weitere vorteilhafte Vorgehensweise ist dadurch gekennzeichnet, dass die Soll-Position in einem sich im Frontbereich vor der Biegemaschine befindlichen Umrissbereich des umzuformenden Blechs ausgewählt wird. Damit wird für die Bedienperson die Möglichkeit geschaffen, das zu biegende Blech oder das Werkstück während des Biegevorgangs oder Beschickungsvorgangs einfacher handhaben zu können. Dabei befindet sich die Bedienvorrichtung stets im Umrissbereich des umzuformenden Blechs oder Werkstücks, wodurch nunmehr auch die Eingabe von Bedienbefehlen, beispielsweise mit dem Fuß des Benutzers, einfach und ohne zusätzlichen Positionieraufwand der Bedienvorrichtung durchgeführt werden kann.

Vorteilhaft ist auch eine Verfahrensvariante, bei welcher der Soll-Verfahrweg zwischen der Ist-Position und der Soll-Position als streckenmäßig kürzeste Verbindungslinie ermittelt wird. Damit wird je nach relativer Lage der Positionen zueinander auch die kürzeste und optimalste Verstellzeit für die Verlagerungsbewegung entlang des Soll-Verstellwegs erzielt.

Weiters ist ein Vorgehen vorteilhaft, bei dem die Ist-Position der Bedienvorrichtung und/oder die weitere Ist-Position der Bedienperson laufend oder in vorbestimmten Intervallen aktuell ermittelt wird. Damit kann je nach gewähltem Ermittlungsintervall eine Aktualisierung der jeweiligen Ist-Position erfolgen. Weiters kann damit auch die Positioniergenauigkeit zusätzlich erhöht und verbessert werden.

Eine weitere vorteilhafte Vorgehensweise ist dadurch gekennzeichnet, dass zumindest die Übermittlung von Signalen und/oder Daten zwischen den Kommunikationsschnittstellen drahtlos durchgeführt wird und/oder zwischen den Ortungsmitteln der Positions-Ortungseinheit drahtlos durchgeführt. Dadurch kann auf die Verlegung von Kabeln oder dergleichen, welche zumeist hinderlich sind, verzichtet werden.

Vorteilhaft ist auch eine Verfahrensvariante, bei welcher an der Bedienvorrichtung zusätzlich eine Ablageeinheit vorgesehen ist. Durch das Vorsehen zumindest einer zusätzlichen Ablageeinheit kann die Bedienvorrichtung auch zum Transport von Blechen und/oder Werkstücken von einer Biegemaschine zu einer anderen Biegemaschine eingesetzt werden. Weiters kann die Ablageeinheit aber auch zur Zwischenablage von Werkstücken und/oder Datenträgern oder dergleichen dienen.

Schließlich zeichnet sich eine andere Vorgehensweise dadurch aus, wenn die Ablageeinheit relativ bezüglich eines Basisgehäuses der Bedienvorrichtung verstellbar ist. Damit kann je nach gewählter Verstellrichtung und Verstellmöglichkeit ein ergonomischer Transport von zusätzlichen Gegenständen an der Ablageeinheit ermöglicht werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Fertigungsanlage mit einer Biegemaschine und schematisch angedeuteter Bedienvorrichtung, in Frontansicht;
- Fig. 2: die Fertigungsanlage nach Fig. 1, in Seitenansicht;
- Fig. 3: die Fertigungsanlage nach den Fig. 1 und 2, in Draufsicht und stark stilisierten Anlagenkomponenten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss. Bei der relativen Richtungsangabe wird unter dem Begriff "senkrecht" eine in normaler Ausrichtung, also unter einem Winkel von 90°, bezüglich einer Bezugseben oder einer Bezugslinie verstanden.

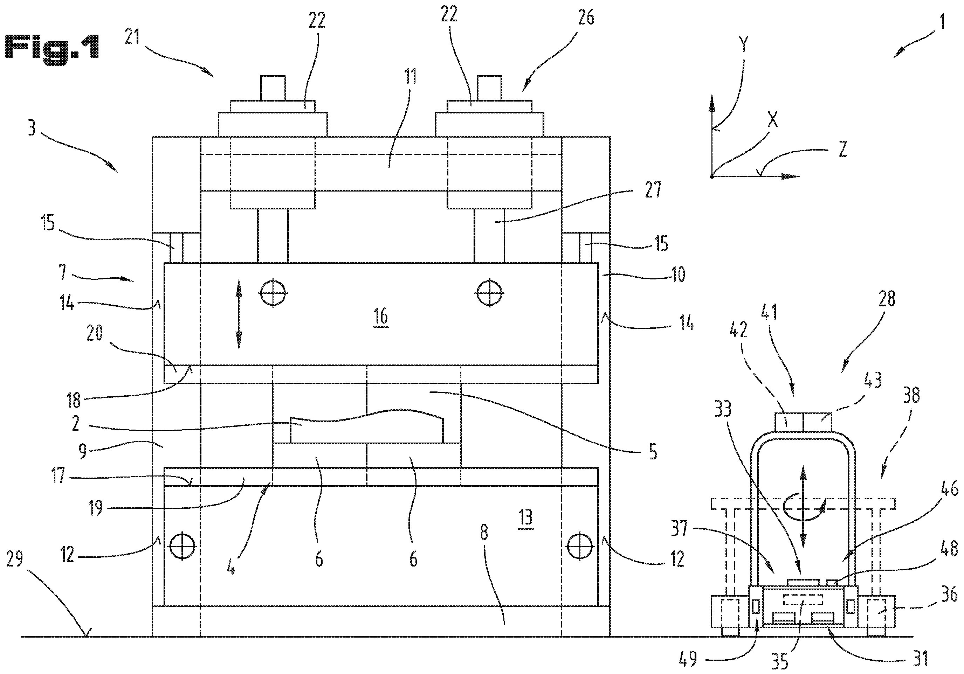

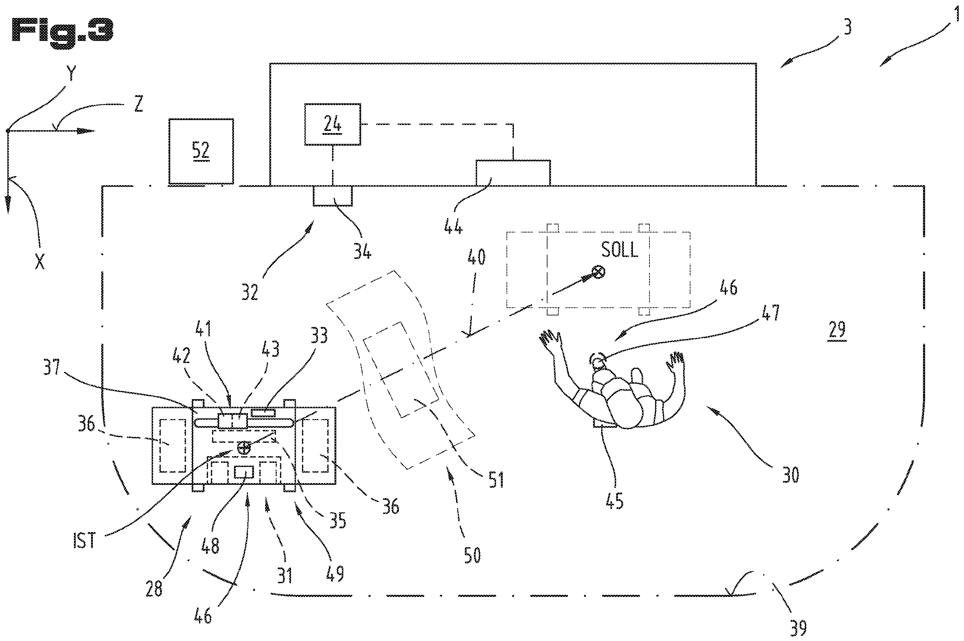

In den Fig. 1 bis 3 ist eine Fertigungsanlage 1 in stark schematisch vereinfachter Darstellung gezeigt, welche im vorliegenden Fall insbesondere für das Freibiegen von aus Blech zu fertigenden Werkstücken 2 mittels Gesenkbiegen ausgebildet ist. Als Ausgangsmaterial wird zumeist ein metallischer Werkstoff verwendet, welcher in seinem unverformten Zustand als Flachmaterial bzw. Flachelement bezeichnet werden kann. In der Fig. 1 wurden einige Anlagenkomponenten der Fertigungsanlage 1 der besseren Übersichtlichkeit halber nicht dargestellt. Die Darstellung in der Fig. 3 wurde stark stilisiert gewählt.

Die im vorliegenden Fall für das Biegen eingesetzte Fertigungsanlage 1 umfasst zumindest eine Biegemaschine 3, im vorliegenden Ausführungsbeispiel eine Biegepresse, insbesondere eine Abkantpresse oder Gesenkbiegepresse, zur Herstellung der Werkstücke 2 oder Werkteile zwischen zumindest einem relativ zueinander verstellbaren Biegewerkzeug 4. Der Einfachheit wurde nur eine Biegemaschine 3 dargestellt, wobei auch mehrere derselben vorgesehen sein können.

Es wäre aber auch unabhängig davon möglich, die Biegemaschine 3 als sogenannte Schwenkbiegemaschine oder Schwingbiegemaschine auszubilden. In diesem Fall kann die Fertigungsanlage 1 auch als Schwenkbiegeanlage oder Schwingbiegeanlage bezeichnet werden. Dabei umfasst Biegemaschine 3 eine Presse, die unter anderem zur klemmenden Halterung der aus dem Blech zu fertigenden Werkstücke 2 oder Werkteile zwischen einem relativ zueinander verstellbaren Klemmwerkzeug ausgebildet ist. Das Klemmwerkzeug umfasst dann zumindest eine untere Klemmbacke und eine damit zusammenwirkende obere Klemmbacke. Die untere Klemmbacke kann auch als Unterwange oder Gegenhalter und die obere Klemmbacke kann auch als Oberwange oder Niederhalter bezeichnet werden. Die untere Klemmbacke kann auch als einziger Stempel durchgängig ausgebildet sein. Zur Durchführung des Biegevorgangs umfasst die Biegemaschine 3 der Fertigungsanlage 1 auch noch eine Biegeeinheit, welche auch als Abkanteinheit oder Umformeinheit bezeichnet werden kann. Diese Ausbildungsmöglichkeit der Biegemaschine 3 ist nur beschrieben worden, jedoch ist diese nicht näher dargestellt. Die Art und Ausbildung der Biegemaschine 3 ist bei dem nachfolgend beschriebenen Verfahrensablauf nicht von besonderer Bedeutung. Das Hauptaugenmerk liegt auf der Bedienungsmöglichkeit durch eine Bedienperson.

Das Biegewerkzeug 4 der hier gezeigten und als Biegepresse ausgebildeten Biegemaschine 3 umfasst im vorliegenden Ausführungsbeispiel zumindest einen Biegestempel 5, zumeist jedoch mehrere Biegestempel 5, und zumindest ein Biegegesenk 6, zumeist jedoch mehrere damit zusammenwirkende Biegegesenke 6. Der zumindest eine Biegestempel 5 ist dabei oberhalb des zu fertigenden Werkstücks 2 an der Biegemaschine 3 angeordnet und dort auch entsprechend gehalten, insbesondere geklemmt. Auch das zumindest eine Biegegesenk 6 ist an der Biegemaschine 3 gehalten, insbesondere daran geklemmt gehalten.

Als Koordinatensystem wird bei derartigen Biegemaschinen 3 grundsätzliches als "X"-Richtung jene bezeichnet, welche in einer Horizontalebene sowie in normaler Ausrichtung bezüglich der Längserstreckung des Biegewerkzeugs 4, insbesondere dessen Biegestempel 5 sowie Biegegesenk 6 verläuft. Somit ist dies jene Richtung, welche auch der Zufuhrrichtung oder der Entnahmerichtung entspricht. Als "Y"-Richtung wird die Vertikalrichtung verstanden, welche somit in Höhenrichtung des Biegewerkzeugs 4 und weiters in normaler Richtung bezüglich der Horizontalebene verläuft. Schließlich wird als "Z"-Richtung jene Richtung verstanden, welche in Längsrichtung bzw. in der Längserstreckung des Biegewerkzeugs 4, insbesondere dessen Biegestempel 5 sowie Biegegesenk 6, verläuft. Damit ist auch die Längserstreckung der vom Biegewerkzeug 4 definierten Biegekante in der "Z"-Richtung verlaufend ausgerichtet.

Ein Maschinengestell 7 der Biegemaschine 3 umfasst beispielsweise eine Bodenplatte 8, auf der vertikal aufragend, zueinander in Querrichtung beabstandet und parallel zueinander ausgerichtete Seitenwangen 9, 10 angeordnet sind. Diese sind bevorzugt durch einen massiven, beispielsweise aus einem Blechformteil gebildeten Querverband 11 an ihren von der Bodenplatte 8 distanzierten Endbereichen miteinander verbunden.

Die Seitenwangen 9, 10 können zur Bildung eines Freiraums für das Umformen des Werkstücks 2 etwa C - förmig ausgebildet sein, wobei an Frontstirnflächen 12 von bodennahen Schenkeln der Seitenwangen 9, 10 ein feststehender, insbesondere auf der Bodenplatte 8 aufstehender, erster Pressbalken 13 oder unterer Pressbalken 13 befestigt ist. Dieser ortsfest angeordnete und feststehende Pressbalken 13 kann auch als Presstisch bezeichnet werden, an welchem Teile des Biegewerkzeugs 4 angeordnet und auch gehalten sind. An Frontstirnflächen 14 von von der Bodenplatte 8 entfernten Schenkeln ist in Linearführungen 15 ein zu dem den Tischbalken bildenden Pressbalken 13 relativ verstellbarer weiterer Pressbalken 16, insbesondere ein Druckbalken, geführt gelagert. Der weitere Pressbalken 16 kann auch als zweiter Pressbalken oder oberer Pressbalken aber auch als Druckbalken bezeichnet werden.

Auf einander gegenüberliegenden, parallel zueinander verlaufenden Stirnflächen 17, 18 der beiden Pressbalken 13, 16 können Werkzeugaufnahmen 19, 20 zur Bestückung mit dem oder den Biegewerkzeugen 4 angeordnet sein. Das oder die Biegewerkzeuge 4 können auch unter Zwischenschaltung eines nicht näher dargestellten Adapters an den Werkzeugaufnahmen 19, 20 gehalten sein, wobei dies für einen Wechselvorgang einzelner Komponenten oder des gesamten Biegewerkzeugs 4 eher als nicht günstig angesehen wird, jedoch auch eine Möglichkeit darstellen kann.

Die gezeigte Biegemaschine 3 weist als Antriebsanordnung 21 für den verstellbaren Pressbalken 16, nämlich den Druckbalken, z.B. zwei mit elektrischer Energie betriebene Antriebsmittel 22 auf, die mit einer aus einem Energienetz 23 angespeisten Biegemaschinen-Steuerungseinheit 24 leitungsverbunden sind. Ein mit der Biegemaschinen-Steuerungseinheit 24 kommunikationsverbundenes Eingabeterminal 25 kann beispielsweise eine Möglichkeit zur Steuerung und den Betrieb der Biegemaschine 3, insbesondere auch den Wechselvorgang des Biegewerkzeugs 4, darstellen.

Bei den Antriebsmitteln 22 kann es sich z.B. um elektromotorische Spindeltriebe 26 handeln, wie sie allgemein bekannt sind, von denen Stellmittel 27 für eine reversible Stellbewegung des durch den Druckbalken gebildeten oberen Pressbalkens 16 mit diesem, zum Beispiel antriebsverbunden sind. Unabhängig davon wäre es aber auch noch möglich, das oder die Antriebsmittel 22 durch hydraulisch und/oder pneumatisch betätigbare Stellmittel zu bilden. Dabei können Zylinder-Kolbenanordnungen Anwendung finden. Es wären aber auch andere Antriebsmittel, wie z.B. Exzenterantriebe, Kniehebelantriebe, Zahnstangenantriebe usw. denkbar.

Auf weitere für den Betrieb einer derartigen Biegemaschine 3 erforderliche Details, wie beispielsweise Zufuhrvorrichtungen, Manipulationsvorrichtungen oder dergleichen, wird in der gegenständlichen Beschreibung zur Vermeidung einer unnötigen Länge der Beschreibung verzichtet.

Eine weitere, gegebenenfalls zusätzliche, Möglichkeit zur Steuerung des Betriebs der Biegemaschine 3, insbesondere für die Durchführung des Biegevorgangs mittels des zumeist bezüglich des unteren feststehend angeordneten ersten Pressbalkens 13 relativ dazu verstellbaren weiteren Pressbalkens 16, kann bei diesem Ausführungsbeispiel noch eine eigene Bedienvorrichtung 28 darstellen. Die Bedienvorrichtung 28 lagert dabei auf einer überwiegend ebenen und eine horizontale Ausrichtung aufweisenden Aufstandsfläche 29 auf. Zumeist handelt es sich dabei um einen Hallenboden einer Fertigungshalle.

Die Bedienvorrichtung 28 ist überwiegend dazu vorgesehen, mittels einer unteren Extremität einer Bedienperson 30, insbesondere eines Fußes, an einer Bedien-Eingabeeinheit 31 Bedienbefehle oder Steuerungsbefehle von der Bedienperson zu erhalten und dabei entsprechende Signale oder Steuerungssignale zu generieren und diese an die Biegemaschinen-Steuerungseinheit 24 zu übermitteln oder zu übertragen. Es kann aber auch eine davon abweichende Eingabemöglichkeit vorgesehen sein, wie diese z.B. mittels von Fingern oder einer Hand der Bedienperson 30. Dazu ist zwischen der Biegemaschine 3 und der Bedienvorrichtung 28 eine Kommunikationseinheit 32 vorgesehen, welche zumindest eine erste Kommunikationsschnittstelle 33 an der Bedienvorrichtung 28 und zumindest eine zweite Kommunikationsschnittstelle 34 an der Biegemaschine 3 umfasst. Zur Übermittlung von Signalen steht die erste Kommunikationsschnittstelle 33 mit der zweiten Kommunikationsschnittstelle 34 in Kommunikationsverbindung. Bevorzugt erfolgt die Übermittlung von Signalen und/oder Daten zwischen den Kommunikationsschnittstellen 33, 34 drahtlos.

Weiters kann auch noch eine Bedien-Steuerungseinheit 35 an der Bedienvorrichtung 28 vorgesehen sein. Zur Durchführung von autonomen und selbsttätigen Verfahrbewegungen der Bedienvorrichtung 28 umfasst diese auch noch einen Fahrantrieb 36, welcher unterschiedlichst ausgebildet sein kann, um die jeweils erforderlichen oder geforderten Fahrbewegungen durchführen zu können. Die Energieversorgung desselben kann z.B. mittels Batterien oder Akkus auf elektrischer Basis erfolgen. Für die Aufladung kann eine Ladestation 52 im Bereich der Fertigungsanlage 1 vorgesehen sein. Es wären aber auch andere alternative Antriebsmittel oder Energiemittel denkbar. Die Bedienvorrichtung 28 umfasst auch noch ein Basisgehäuse 37, in oder auf welchem die zuvor beschriebenen sowie gegebenenfalls nicht näher beschriebenen Bauteilkomponenten angeordnet sind.

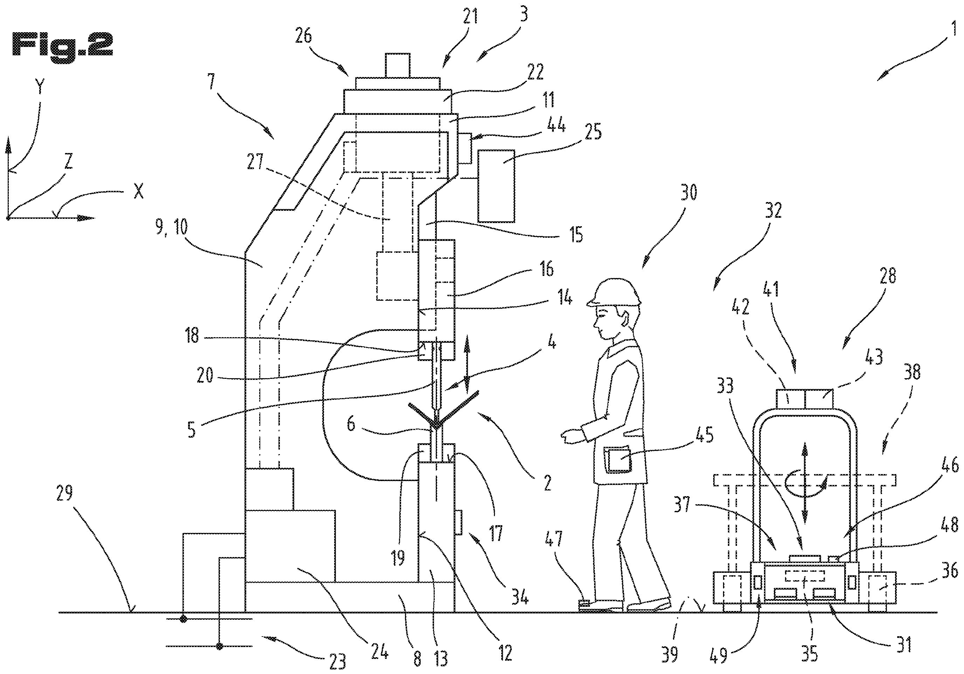

Die Bedienvorrichtung 28 kann auch noch zusätzlich eine Ablageeinheit 38 umfassen, welche vereinfacht in der Fig. 2 angedeutet ist. Die Ablageeinheit 38 kann z.B. dazu dienen, zu bearbeitende Bleche oder Werkstücke 2 aufzunehmen und während der Verfahrbewegung mit zu transportieren. Bevorzugt kann die Ablageeinheit 38 relativ bezüglich des Basisgehäuses 37 der Bedienvorrichtung 28 verstellbar ausgebildet sein. Auf die Darstellung diverser Antriebsmittel wurde der besseren Übersichtlichkeit halber verzichtet.

Es ist hier weiters vorgesehen, dass die Bedienvorrichtung 28 aufgrund von nachfolgend näher beschriebenen Verfahrensschritten für die Eingabe von Bedienbefehlen der Bedienperson in deren unmittelbaren Umgebung bzw. deren unmittelbaren Umgebungsbereich zur Verfügung steht. Dies stets in Abhängigkeit vom Standort der Bedienperson und/der der Umrissgeometrie des zu bearbeitenden Blechs oder Werkstücks 2.

Dazu ist für die Bedienvorrichtung 28 eine Arbeitsfläche 39 festzulegen oder zu definieren, welche innerhalb vorgegebener Grenzen liegt oder von diesen umgrenzt ist. Innerhalb der Grenzen der Arbeitsfläche 39 ist die zumindest eine Bedienvorrichtung 28 verlagerbar. Eine mögliche Grundrissform der Arbeitsfläche 39 ist mit einer strich-punktierten Linie in der Fig. 3 angedeutet.

Weiters ist eine Soll-Position innerhalb der Arbeitsfläche 39 für die Bedienvorrichtung 28 für den durchzuführenden Biegevorgang zu ermitteln oder festzulegen, wobei diese mit einem Kreis und einem innerhalb desselben liegenden "X" angedeutet ist. Die Ermittlung oder Festlegung der Soll-Position wird nachfolgend noch näher beschrieben. Die Soll-Position wird via der ersten Kommunikationsschnittstelle 33 an die Bedien-Steuerungseinheit 35 der Bedienvorrichtung 28 übermittelt oder übertragen.

Es ist auch noch eine Ermittlung des aktuellen Standorts oder der aktuellen Ist-Position der zumindest einen Bedienvorrichtung 28 innerhalb der Arbeitsfläche 39 durchzuführen. In der Fig. 3 ist die Ist-Position mit einem Kreis und einem Fadenkreuz an der Bedienvorrichtung 28 angedeutet. Damit ist bekannt, wo der aktuelle Standort der Bedienvorrichtung 28 ist und an welche Soll-Position die Bedienvorrichtung 28 verlagert bzw. verfahren werden soll. Dazu wird ein Soll-Verfahrweg 40 ausgehend von der Ist-Position hin zur Soll-Position ermittelt und ein Fahrbefehl generiert. Der Fahrbefehl wird an den Fahrantrieb 36 der Bedienvorrichtung 28 übermittelt, wobei dies zumeist von der Bedien-Steuerungseinheit 35 erfolgt. Der Umriss der Bedienvorrichtung 28 ist an der Soll-Position mit strichlierten Linien angedeutet.

Anschließend erfolgt die selbsttätige und autonome Verlagerung der Bedienvorrichtung 28 mittels des Fahrantriebs 36 entlang des ermittelten Soll-Verfahrwegs 40 hin zur Soll-Position. Ist diese erreicht, wird die Bedienvorrichtung 28 an der Soll-Position positioniert abgestellt und steht dann für die Eingabe eines Bedienbefehls von der Bedienperson zur Verfügung.

Die Arbeitsfläche 39 für die Bedienvorrichtung 28 befindet sich überwiegend oder zu einem überwiegenden Anteil in einem Frontbereich vor der Biegemaschine 3. Weiters können die Arbeitsfläche 39 oder deren Grenzen in der Biegemaschinen-Steuerungseinheit 24 hinterlegt sein. So wäre es möglich, die Arbeitsfläche 39 für die Bedienvorrichtung 28 durch ein sich in X-Richtung und Z-Richtung erstreckendes Koordinatensystem zu definieren. Es wäre aber auch möglich, die Grenzen z.B. mittels eines elektronischen Positionssystems (GPS) oder eines am oder in der Aufstandsfläche 29 (Hallenboden) verlegten Begrenzungskabels zu definieren. Eine Grenze der Arbeitsfläche 39 kann z.B. vom Maschinengestell 7 der Biegemaschine 3 in dessen Längserstreckung - als in Richtung des Biegebereichs - definiert werden.

Um eine eindeutige Bestimmung und Festlegung der einzelnen Positionen durchführen zu können, wird zumeist ein fixes oder globales Koordinatensystem bezüglich der Biegemaschine 3 festgelegt. Dabei kann auch ein Tool Center Point als Nullpunkt des globalen Koordinatensystems festgelegt werden.

Der Bedienvorrichtung 28 kann ein zusätzliches lokales oder körperliches Koordinatensystem zugeordnet werden, um so die relative Lage und Ausrichtung der Bedienvorrichtung 28 im fixen oder globalen Koordinatensystem feststellen oder ermitteln zu können. Dies ist grundsätzlich als bekannt anzusehen, weshalb nicht mehr näher darauf eingegangen wird.

Die zuvor angedeutete Eingabe oder Übermittlung der anzufahrenden Soll-Position an die Bedienvorrichtung 28 kann unterschiedlichst erfolgen.

So kann vorgesehen sein, dass direkt an der Bedienvorrichtung 28 eine Eingabeeinheit 41 angeordnet ist. Die Eingabeeinheit 41 steht mit der ersten Kommunikationsschnittstelle 33 in Kommunikationsverbindung, wobei die Soll-Position von der Eingabeeinheit 41 via der ersten Kommunikationsschnittstelle 33 an die Bedien-Steuerungseinheit 35 der Bedienvorrichtung 28 übermittelt wird.

Die Eingabeeinheit 41 kann z.B. ein Erfassungsmittel 42 umfassen, welches durch eine optische und/oder elektronische Lesevorrichtung gebildet sein kann. Damit wird es für die Bedienperson möglich, Bearbeitungsdaten für das zu biegende Blech oder Werkstück 2 direkt an der Bedienvorrichtung 28 einzugeben und damit bekannt zu geben. In den Bearbeitungsdaten oder den Auftragsdaten kann die Soll-Position direkt enthalten sein oder ist diese aus den Daten zu ermitteln. So kann die Soll-Position vom zumindest einen Erfassungsmittel 42 erfasst werden und der Eingabeeinheit 41 zur Weiterleitung bereitgestellt werden.

Unabhängig oder zusätzlich wäre es auch noch möglich, dass die Eingabeeinheit 41 ein Eingabemittel 43 umfasst und die Soll-Position manuell am Eingabemittel 43 eingegeben wird und der Eingabeeinheit 41 bereitgestellt wird. Das Eingabemittel 43 kann z.B. durch eine Tastatur, einen Touch-Screen oder dergleichen gebildet sein.

Eine weitere, gegebenenfalls für sich eigenständige und unabhängige Möglichkeit zur Festlegung und Bestimmung der Soll-Position der Bedienvorrichtung 28 kann auf Basis des in der Biegemaschinen-Steuerungseinheit 24 hinterlegten aktuellen Arbeitsprogramms für das zu bearbeitende Blech oder das Werkstück 2 erfolgen. Die Soll-Position wird dabei berechnet, wobei dies aufgrund der bekannten Umrissgeometrie des Blechs oder des Werkstücks 2 und dem Anordnungsort des für den Biegevorgang aktuell verwendeten Biegewerkzeug 4 erfolgt. Die so berechnete Soll-Position wird von der Biegemaschinen-Steuerungseinheit 24 an die zweite Kommunikationsschnittstelle 34 übermittelt oder übertragen und von dieser weiter an die erste Kommunikationsschnittstelle 33 der Bedienvorrichtung 28 übermittelt.

Es wäre aber auch noch möglich, im Bereich der Biegemaschine 3 zumindest eine eigene Erfassungsvorrichtung 44 vorzusehen, um die aktuelle Bearbeitungslage für das zu biegende Blech oder Werkstück 2 vor dem Beginn des Biegevorgangs an der Biegemaschine 3 feststellen oder ermitteln zu können. Die Erfassungsvorrichtung 44 kann z.B. von einer optischen Vorrichtung, einer Kamera, einem Laserscanner oder dergleichen gebildet sein. Damit kann wiederum die Soll-Position aufgrund der Positionsermittlung des Blechs oder Werkstücks 2 von der Biegemaschinen-Steuerungseinheit 24 ermittelt oder berechnet werden und an die zweite Kommunikationsschnittstelle 34 übermittelt oder übertragen werden. Die Soll-Position wird nachfolgend von der zweiten Kommunikationsschnittstelle 34 weiter an die erste Kommunikationsschnittstelle 33 der Bedienvorrichtung 28 übermittelt.

Unabhängig davon könnte aber auch vorgesehen werden, dass die zuvor beschriebene Erfassungsvorrichtung 44 eine weitere Ist-Position jedoch von der Bedienperson 30 erfasst oder ermittelt. Dies bevorzugt innerhalb der Arbeitsfläche 39. Ist die weitere Ist-Position der Bedienperson 30 bekannt, wird auf Basis der ermittelten Ist-Position der Bedienperson 30 mittels der Biegemaschinen-Steuerungseinheit 24 die Soll-Position für die Bedienvorrichtung 28 berechnet oder ermittelt. Von der Biegemaschinen-Steuerungseinheit 24 wird die anzufahrende Soll-Position an die zweite Kommunikationsschnittstelle 34 übermittelt oder übertragen und von dieser an die erste Kommunikationsschnittstelle 33 der Bedienvorrichtung 28 übermittelt.

Zusätzlich oder unabhängig davon könnte auch eine Positions-Signalisierungseinheit 45 an der Bedienperson 30 angeordnet oder vorgesehen werden. Von der Positions-Signalisierungseinheit 45 wird auf Basis der aktuellen, bevorzugt innerhalb der Arbeitsfläche 39 befindlichen Ist-Position der Bedienperson 30 die Soll-Position für die Bedienvorrichtung 28 berechnet oder ermittelt. Die Soll-Position wird bevorzugt direkt von der Positions-Signalisierungseinheit 45 an die erste Kommunikationsschnittstelle 33 der Bedienvorrichtung 28 übermittelt.

Zusätzlich oder unabhängig davon könnte auch noch eine Positions-Ortungseinheit 46 vorgesehen sein, welche zwischen der Bedienperson 30 und der Bedienvorrichtung 28 seine Wirkung entfaltet. Die Positions-Ortungseinheit 46 umfasst zumindest ein erstes Ortungsmittel 47 und zumindest ein zweites Ortungsmittel 48. Dabei kann es sich um eine Sender-Empfängeranordnung handeln, welche ähnlich oder gleich wie bei bekannten Lawinen-Verschütteten-Suchgeräten (LVS-Geräten) aufgebaut sein kann.

Das erste Ortungsmittel 47 kann an der Bedienperson 30 angeordnet sein und z.B. durch einen Sender gebildet sein, welcher ein Sendesignal aussendet. Dabei kann z.B. ein definiertes Magnetfeld aufgebaut werden. Das zweite Ortungsmittel 48 ist an der Bedienvorrichtung 28 vorgesehen oder angeordnet. Dabei kann es sich um eine Empfangsvorrichtung für das vom ersten Ortungsmittel 47 ausgesendete Sendesignal handeln. Durch die relative Ausrichtung und Orientierung des ersten Ortungsmittels 47 bezüglich der Arbeitsfläche 39, insbesondere von deren Koordinatensystem, kann vor dem Erreichen der Soll-Position oder beim Erreichen der Soll-Position die Bedien-Eingabeeinheit 31 der Bedienvorrichtung 28 hin in Richtung auf das erste Ortungsmittel der Bedienperson 30 ausgerichtet werden. Zumeist handelt es sich bei der Bedien-Eingabeeinheit 31 um Eingabetaster, welche mit dem Fuß der Bedienperson 30 zu bedienen sind. Durch die orientierte Ausrichtung der Bedien-Eingabeeinheit 31 kann diese somit stets dem Fuß oder den Füßen, insbesondere den Fußspitzen, der Bedienperson 30 zugewendet werden. Damit kann eine Fehlorientierung der Bedienvorrichtung 28 bezüglich der Bedienperson 30 verhindert werden.

Grundsätzlich soll sich die Soll-Position in einem sich im Frontbereich vor der Biegemaschine 3 befindlichen Umrissbereich des umzuformenden Blechs oder Werkstücks 2 befinden und ausgewählt werden. Weiters ist es vorteilhaft, wenn der Soll-Verfahrweg 40 zwischen der Ist-Position und der Soll-Position als streckenmäßig kürzeste Verbindungslinie ermittelt wird.

Um ungewollte Kollisionen der Bedienvorrichtung 28 während deren autonomen Fahrbewegung zu verhindern, kann auch noch zumindest eine Sensoreinheit 49 mit zumindest einem Sensor, bevorzugt jedoch mehreren Sensoren, vorgesehen sein. Die Sensoreinheit 49 kann direkt an der Bedienvorrichtung 28 angeordnet sein und dient dazu, innerhalb des Soll-Verfahrwegs 40 befindliche Gegenstände, wie z.B. Paletten, Werkstücke 2, Bleche oder dergleichen, zu erkennen. Aufgrund der räumlichen Ausdehnung der Bedienvorrichtung 28 ragt deren Basisgehäuse 37 zumeist seitlich über den eine Linie bildenden Soll-Verfahrweg 40 hinaus.

Während oder schon vor der Verfahrbewegung der Bedienvorrichtung 28 entlang des ermittelten Soll-Verfahrwegs 40 wird ein Fahrstreifen 50 berechnet oder definiert. Mittels der Sensoreinheit 49 kann so ein in den Fahrstreifen 50 hineinragender Gegenstand 51 erkannt oder erfasst werden. Von der Bedien-Steuerungseinheit 35 und/oder der Biegemaschinen-Steuerungseinheit 24 kann dann ein Korrektur-Verfahrweg um den erfassten Gegenstand 51 herum hin zur Soll-Position ermittelt werden, um so eine kollisionsfreie Verfahrbewegung erzielen zu können.

Die aktuelle Ermittlung der zuvor beschriebenen Ist-Position der Bedienvorrichtung 28 und/oder der weiteren Ist-Position der Bedienperson 30 kann laufend oder in vorbestimmten Intervallen durchgeführt werden.

Es wäre auch noch möglich, dass die Bedienvorrichtung 28 von einer Biegemaschine 3 der Fertigungsanlage 1 zu einer weiteren Biegemaschine 3 der Bedienperson "folgt", wobei sich dann die Soll-Position im Bereich der zumindest einen weiteren Biegemaschine 3 befindet. Die Bekanntgabe der neuen Soll-Position kann dann analog erfolgen, wie dies zuvor für die erste Biegemaschine 3 beschrieben worden ist. In diesem Fall erstreckt sich die Arbeitsfläche 39 auch zwischen den Biegemaschinen 3 der Fertigungsanlage 1.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Die zuvor beschriebenen Maßnahmen oder Verfahrensschritte dienen bevorzugt dazu, stets die Positionierung der Bedienvorrichtung 28 innerhalb der Arbeitsfläche 39 so optimal wie möglich für die Bedienperson 30 zu gestalten, um dieser auch mit einiger Distanz von der Biegemaschine 3 die Bedienung und den damit verbundenen Biegevorgang zu ermöglichen, ohne dass die Bedienperson 30 die Positionierung der Bedienvorrichtung 28 selbst manuell durchführen muss.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fertigungsanlage | 31 | Bedien-Eingabeeinheit |
| 2 | Werkstück | 32 | Kommunikationseinheit |
| 3 | Biegemaschine | 33 | erste Kommunikationsschnittstelle |
| 4 | Biegewerkzeug | 34 | zweite Kommunikationsschnitt-stelle |
| 5 | Biegestempel | | |
| 6 | Biegegesenk | 35 | Bedien-Steuerungseinheit |
| 7 | Maschinengestell | 36 | Fahrantrieb |
| 8 | Bodenplatte | 37 | Basisgehäuse |
| 9 | Seitenwange | 38 | Ablageeinheit |
| 10 | Seitenwange | 39 | Arbeitsfläche |
| 11 | Querverband | 40 | Soll-Verfahrweg |
| 12 | Frontstirnfläche | 41 | Eingabeeinheit |
| 13 | Pressbalken | 42 | Erfassungsmittel |
| 14 | Frontstirnfläche | 43 | Eingabemittel |
| 15 | Linearführung | 44 | Erfassungsvorrichtung |
| 16 | Pressbalken | 45 | Positions-Signalisierungseinheit |
| 17 | Stirnfläche | 46 | Positions-Ortungseinheit |
| 18 | Stirnfläche | 47 | erstes Ortungsmittel |
| 19 | Werkzeugaufnahme | 48 | zweites Ortungsmittel |
| 20 | Werkzeugaufnahme | 49 | Sensoreinheit |
| 21 | Antriebsanordnung | 50 | Fahrstreifen |
| 22 | Antriebsmittel | 51 | Gegenstand |
| 23 | Energienetz | 52 | Ladestation |
| 24 | Biegemaschinen-Steuerungseinheit | | |
| 25 | Eingabeterminal | | |
| 26 | Spindeltrieb | | |
| 27 | Stellmittel | | |
| 28 | Bedienvorrichtung | | |
| 29 | Aufstandsfläche | | |
| 30 | Bedienperson | | |

## Patentansprüche

1. Verfahren zur relativen Positionierung zumindest einer Bedienvorrichtung (28) bezüglich einer Biegemaschine (3), wobei die Bedienvorrichtung (28) zur Eingabe von Signalen, insbesondere von Bedienbefehlen, an die Biegemaschine (3) einer Fertigungsanlage (1) zum Biegen von einem aus einem Blech zu fertigenden Werkstück (2) ausgebildet ist, und bei welchem folgende Schritte durchgeführt werden:
- Bereitstellen der zumindest einen Bedienvorrichtung (28) und Vorsehen einer Bedien-Eingabeeinheit (31), eines Fahrantriebs (36), einer Bedien-Steuerungseinheit (35) sowie einer ersten Kommunikationsschnittstelle (33) an der zumindest einen Bedienvorrichtung (28),
- Bereitstellen der Biegemaschine (3) mit einer Biegemaschinen-Steuerungseinheit (24) und einer zweiten Kommunikationsschnittstelle (34) an der Biegemaschine (3), wobei die erste Kommunikationsschnittstelle (33) an der zumindest einen Bedienvorrichtung (28) mit der zweiten Kommunikationsschnittstelle (34) zur Übermittlung von Signalen in Kommunikationsverbindung steht,
- Festlegen einer Arbeitsfläche (39) mit vorgegebenen Grenzen für die Bedienvorrichtung (28), innerhalb welcher Grenzen der Arbeitsfläche (39) die zumindest eine Bedienvorrichtung (28) verlagerbar ist, wobei die Arbeitsfläche (39) von einer ebenen und eine horizontale Ausrichtung aufweisenden Aufstandsfläche (29) definiert wird,
wobei, - die aktuelle Ist-Position der zumindest einen Bedienvorrichtung (28) innerhalb der Arbeitsfläche (39) ermittelt wird,
**dadurch gekennzeichnet,**
- **dass** eine Soll-Position der Bedienvorrichtung (28) auf Basis des in der Biegemaschinen-Steuerungseinheit hinterlegten aktuellen Arbeitsprogramms für das zu bearbeitende Blech oder das Werkstück (2) berechnet wird,
- **dass** die berechnete Soll-Position für die Bedienvorrichtung (28) mittels der zweiten Kommunikationsschnittstelle (34) via der ersten Kommunikationsschnittstelle (33) an die Bedien-Steuerungseinheit (35) der Bedienvorrichtung (28) übermittelt wird,
- **dass** ein Soll-Verfahrweg (40) der zumindest einen Bedienvorrichtung (28) ausgehend von deren aktuellen Ist-Position zu der Soll-Position ermittelt wird,
- **dass** ein Fahrbefehl generiert wird und der Fahrbefehl an den Fahrantrieb (36) der Bedienvorrichtung (28) übermittelt wird,
- **dass** die Bedienvorrichtung (28) mittels des Fahrantriebs (36) entlang des ermittelten Soll-Verfahrwegs (40) selbsttätig und autonom verlagert wird,
- **dass** an der Bedienvorrichtung (28) zumindest eine Sensoreinheit (49) vorgesehen ist, wobei während der Verfahrbewegung der Bedienvorrichtung (28) entlang des ermittelten Soll-Verfahrwegs (40) von der Bedienvorrichtung (28) ein Fahrstreifen (50) definiert wird, und mittels welcher Sensoreinheit (49) während der Verfahrbewegung ein in den definierten Fahrstreifen (50) hineinragender Gegenstand erfasst wird und weiters von der Bedien-Steuerungseinheit (35) und/oder der Biegemaschinen-Steuerungseinheit (24) ein Korrektur-Verfahrweg um den erfassten Gegenstand herum hin zur Soll-Position ermittelt wird, um eine kollisionsfreie Verfahrbewegung zu erzielen, und
- **dass** die Bedienvorrichtung (28) an der Soll-Position positioniert abgestellt wird.

2. Verfahren nach Anspruch 1, **dadurch gekennzeichnet, dass** direkt an der Bedienvorrichtung (28) eine Eingabeeinheit (41) vorgesehen ist, wobei die Eingabeeinheit (41) mit der ersten Kommunikationsschnittstelle (33) in Kommunikationsverbindung steht und die Soll-Position von der Eingabeeinheit (41) via der ersten Kommunikationsschnittstelle (33) an die Bedien-Steuerungseinheit (35) der Bedienvorrichtung (28) übermittelt wird.

3. Verfahren nach Anspruch 2, **dadurch gekennzeichnet, dass** die Eingabeeinheit (41) zumindest ein Erfassungsmittel (42) umfasst und die Soll-Position vom zumindest einen Erfassungsmittel (42) erfasst wird und der Eingabeeinheit (41) bereitgestellt wird.

4. Verfahren nach Anspruch 2 oder 3, **dadurch gekennzeichnet, dass** die Eingabeeinheit (41) ein Eingabemittel (43) umfasst und die Soll-Position manuell am Eingabemittel (43) eingegeben wird und der Eingabeeinheit (41) bereitgestellt wird.

5. Verfahren nach einem der vorhergehenden Ansprüche, **dadurch gekennzeichnet, dass** von einer Erfassungsvorrichtung (44) eine weitere Ist-Position einer Bedienperson (30) der Biegemaschine (3) ermittelt wird und auf Basis der ermittelten Ist-Position der Bedienperson (30) mittels der Biegemaschinen-Steuerungseinheit (24) die Soll-Position für die Bedienvorrichtung (28) berechnet wird und die Soll-Position von der zweiten Kommunikationsschnittstelle (34) an die erste Kommunikationsschnittstelle (33) übermittelt wird.

6. Verfahren nach einem der vorhergehenden Ansprüche, **dadurch gekennzeichnet, dass** eine Positions-Signalisierungseinheit (45) an einer Bedienperson (30) angeordnet ist und von der Positions-Signalisierungseinheit (45) auf Basis der aktuellen Ist-Position der Bedienperson (30) innerhalb der Arbeitsfläche (39) die Soll-Position für die Bedienvorrichtung (28) ermittelt wird und die Soll-Position an die erste Kommunikationsschnittstelle (33) der Bedienvorrichtung (28) übermittelt wird.

7. Verfahren nach Anspruch 6, **dadurch gekennzeichnet, dass** die ermittelte Soll-Position direkt von der Positions-Signalisierungseinheit (45) an die erste Kommunikationsschnittstelle (33) der Bedienvorrichtung (28) übermittelt wird.

8. Verfahren nach einem der vorhergehenden Ansprüche, **dadurch gekennzeichnet, dass** eine Positions-Ortungseinheit (46) mit einem ersten Ortungsmittel (47) an einer Bedienperson (30) und einem zweiten Ortungsmittel (48) an der Bedienvorrichtung (28) vorgesehen wird und vor Erreichen der Soll-Position oder bei Erreichen der Soll-Position die Bedien-Eingabeeinheit (31) der Bedienvorrichtung (28) hin in Richtung auf das erste Ortungsmittel der Bedienperson (30) ausgerichtet wird.

9. Verfahren nach einem der vorhergehenden Ansprüche, **dadurch gekennzeichnet, dass** sich die Arbeitsfläche (39) für die Bedienvorrichtung (28) in einem Frontbereich vor der Biegemaschine (3) befindet und die Grenzen der Arbeitsfläche (39) in der Biegemaschinen-Steuerungseinheit (24) hinterlegt sind.

10. Verfahren nach einem der vorhergehenden Ansprüche, **dadurch gekennzeichnet, dass** die Arbeitsfläche (39) für die Bedienvorrichtung (28) durch ein sich in X-Richtung und Z-Richtung erstreckendes Koordinatensystem definiert ist.

11. Verfahren nach einem der vorhergehenden Ansprüche, **dadurch gekennzeichnet, dass** eine Grenze der Arbeitsfläche (39) von einem Maschinengestell (7) der Biegemaschine (3) in dessen Längserstreckung in Z-Richtung definiert wird.

12. Verfahren nach einem der vorhergehenden Ansprüche, **dadurch gekennzeichnet, dass** die Soll-Position in einem sich im Frontbereich vor der Biegemaschine (3) befindlichen Umrissbereich des umzuformenden Blechs oder Werkstücks (2) ausgewählt wird.

13. Verfahren nach einem der vorhergehenden Ansprüche, **dadurch gekennzeichnet, dass** der Soll-Verfahrweg (40) zwischen der Ist-Position und der Soll-Position als streckenmäßig kürzeste Verbindungslinie ermittelt wird.

14. Verfahren nach einem der vorhergehenden Ansprüche, **dadurch gekennzeichnet, dass** die Ist-Position der Bedienvorrichtung (28) und/oder die weitere Ist-Position der Bedienperson (30) laufend oder in vorbestimmten Intervallen aktuell ermittelt wird.

15. Verfahren nach einem der vorhergehenden Ansprüche, **dadurch gekennzeichnet, dass** zumindest die Übermittlung von Signalen und/oder Daten zwischen den Kommunikationsschnittstellen (33, 34) drahtlos durchgeführt wird und/oder zwischen den Ortungsmitteln (47, 48) der Positions-Ortungseinheit (46) drahtlos durchgeführt.

16. Verfahren nach einem der vorhergehenden Ansprüche, **dadurch gekennzeichnet, dass** an der Bedienvorrichtung (28) zusätzlich eine Ablageeinheit (38) vorgesehen ist.

17. Verfahren nach Anspruch 16, **dadurch gekennzeichnet, dass** die Ablageeinheit (38) relativ bezüglich eines Basisgehäuses (37) der Bedienvorrichtung (28) verstellbar ist.

## Claims

1. A method for the relative positioning of at least one operating device (28) with respect to a bending machine (3), wherein the operating device (28) is configured for inputting signals, in particular operating commands, to the bending machine (3) of a production plant (1) for bending a workpiece (2) to be produced from a metal sheet, and in which the following steps are carried out:
- providing the at least one operating device (28) and providing an operating input unit (31), a travel drive (36), an operating control unit (35) as well as a first communication interface (33) on the at least one operating device (28),
- providing the bending machine (3) with a bending machine control unit (24) and a second communication interface (34) on the bending machine (3), wherein the first communication interface (33) on the at least one operating device (28) is in communication connection with the second communication interface (34) for transmitting signals,
- defining a working surface (39) with predetermined limits for the operating device (28), within which limits of the working surface (39) the at least one operating device (28) is displaceable, wherein the working surface (39) is defined by a flat support surface (29) having a horizontal orientation,
wherein the current actual position of the at least one operating device (28) within the working surface (39) is determined,
**characterized in**
- **that** a target position of the operating device (28) is calculated on the basis of the current working program, stored in the bending machine control unit, for the sheet metal or the workpiece (2) to be processed,
- **that** the calculated target position for the operating device (28) is transmitted to the operating control unit (35) of the operating device (28) by means of the second communication interface (34) via the first communication interface (33),
- **that** a target travel path (40) of the at least one operating device (28) is determined on the basis of its current actual position to the target position,
- **that** a travel command is generated and the travel command is transmitted to the travel drive (36) of the operating device (28),
- **that** the operating device (28) is automatically and autonomously displaced along the determined target travel path (40) by means of the travel drive (36),
- **that** at least one sensor unit (49) is provided on the operating device (28), wherein a travel lane (50) is defined by the operating device (28) during the travel movement of the operating device (28) along the determined target travel path (40), and by means of which sensor unit (49) an object projecting into the defined travel lane (50) is detected during the travel movement, and furthermore a correction travel path around the detected object towards the target position is determined by the operating control unit (35) and/or the bending machine control unit (24) in order to achieve a collision-free travel movement, and
- **that** the operating device (28) is placed in position at the target position.

2. The method according to claim 1, **characterized in that** an input unit (41) is provided directly on the operating device (28), wherein the input unit (41) is in communication connection with the first communication interface (33) and the target position is transmitted to the operating control unit (35) of the operating device (28) by the input unit (41) via the first communication interface (33).

3. The method according to claim 2, **characterized in that** the input unit (41) comprises at least one detection means (42) and the target position is detected by the at least one detection means (42) and is provided to the input unit (41).

4. The method according to claim 2 or 3, **characterized in that** the input unit (41) comprises an input means (43) and the target position is input manually at the input means (43) and is provided to the input unit (41).

5. The method according to one of the preceding claims, **characterized in that** a further actual position of an operator (30) of the bending machine (3) is determined by a detection device (44) and, on the basis of the determined actual position of the operator (30), the target position for the operating device (28) is calculated by means of the bending machine control unit (24) and the target position is transmitted from the second communication interface (34) to the first communication interface (33).

6. The method according to one of the preceding claims, **characterized in that** a position signaling unit (45) is arranged on an operator (30) and the target position for the operating device (28) is determined by the position signaling unit (45) on the basis of the current actual position of the operator (30) within the working surface (39) and the target position is transmitted to the first communication interface (33) of the operating device (28).

7. The method according to claim 6, **characterized in that** the determined target position is transmitted directly from the position signaling unit (45) to the first communication interface (33) of the operating device (28).

8. The method according to one of the preceding claims, **characterized in that** a position locating unit (46) with a first locating means (47) on an operator (30) and a second locating means (48) on the operating device (28) is provided, and before the target position is reached or when the target position is reached, the operating input unit (31) of the operating device (28) is aligned in the direction of the first locating means of the operator (30).

9. The method according to one of the preceding claims, **characterized in that** the working surface (39) for the operating device (28) is located in a front region of the bending machine (3) and the limits of the working surface (39) are stored in the bending machine control unit (24).

10. The method according to one of the preceding claims, **characterized in that** the working surface (39) for the operating device (28) is defined by a coordinate system extending in X-direction and Z-direction.

11. The method according to one of the preceding claims, **characterized in that** a limit of the working surface (39) is defined by a machine frame (7) of the bending machine (3) in its longitudinal extension in the Z-direction.

12. The method according to one of the preceding claims, **characterized in that** the target position is selected in an outline region of the metal sheet or workpiece (2) to be formed, located in a front region in front of the bending machine (3).

13. The method according to one of the preceding claims, **characterized in that** the target travel path (40) between the actual position and the target position is determined as the shortest connecting line in terms of distance.

14. The method according to one of the preceding claims, **characterized in that** the actual position of the operating device (28) and/or the further actual position of the operator (30) is determined continuously or currently at predetermined intervals.

15. The method according to one of the preceding claims, **characterized in that** at least the transmission of signals and/or data between the communication interfaces (33, 34) is carried out wirelessly and/or between the locating means (47, 48) of the position locating unit (46) is carried out wirelessly.

16. The method according to one of the preceding claims, **characterized in that** a storage unit (38) is additionally provided on the operating device (28).

17. The method according to claim 16, **characterized in that** the storage unit (38) is adjustable relative to a base housing (37) of the operating device (28).

## Revendications

1. Procédé de positionnement relatif d'au moins un dispositif d'actionnement (28) par rapport à une machine de cintrage (3), dans lequel le dispositif d'actionnement (28) est conçu pour l'envoi de signaux, plus particulièrement d'instructions, à la machine de cintrage (3) d'une installation de fabrication (1) pour le cintrage d'une pièce (2) à fabriquer à partir d'une tôle et dans lequel les étapes suivantes sont exécutées :
- mise à disposition de l'au moins un dispositif d'actionnement (28) et prévision d'une unité de saisie d'actionnement (31), d'un dispositif d'entraînement (36), d'une unité de commande d'actionnement (35) ainsi que d'une première interface de communication (33) au niveau de l'au moins un dispositif d'actionnement (28),
- mise à disposition de la machine de cintrage (3) avec une unité de commande de machine de cintrage (24) et une deuxième interface de communication (34) au niveau de la machine de cintrage (3), dans lequel la première interface de communication (33) de l'au moins un dispositif d'actionnement (28) est en liaison de communication avec la deuxième interface de communication (34) pour la transmission des signaux,
- détermination d'une surface de travail (39) avec des limites prédéterminées pour le dispositif d'actionnement (28), l'au moins un dispositif d'actionnement (28) pouvant être déplacé à l'intérieur de ces limites de la surface de travail (39), dans lequel la surface de travail (39) est définie par une surface de contact (29) plane présentant une orientation horizontale,
dans lequel la position effective actuelle de l'au moins un dispositif d' actionnement (28) sur la surface de travail (39) est déterminée,
**caractérisé en ce que**
- une position de consigne du dispositif d'actionnement (28) est calculée sur la base du programme de travail actuel enregistré dans l'unité de commande de la machine de cintrage pour la tôle ou la pièce (2) à usiner,
- la position de consigne calculée pour le dispositif d'actionnement (28) est transmise, au moyen de la deuxième interface de communication (34), via la première interface de communication (33), à l'unité de commande d'actionnement (35) du dispositif d'actionnement (28),
- une trajectoire de consigne (40) de l'au moins un dispositif d'actionnement (28) de sa position effective actuelle vers la position de consigne est déterminée,
- une instruction de déplacement est générée et l'instruction de déplacement est transmise au dispositif d'entraînement (36) du dispositif d'actionnement (28),
- le dispositif d'actionnement (28) est déplacé de manière automatique et autonome au moyen du dispositif d'entraînement (36) le long de la trajectoire de consigne (40) déterminée,
- sur le dispositif d' actionnement (28) est prévue au moins une unité de capteur (49), dans lequel, pendant le déplacement du dispositif d'actionnement (28) le long de la trajectoire de consigne (40) déterminée, une bande de déplacement (50) est définie par le dispositif d'actionnement (28) et, au moyen de cette unité de capteur (49), pendant le déplacement, un objet dépassant dans la bande de déplacement (50) définie est détecté et l'unité de commande d'actionnement (35) et/ou l'unité de commande de la machine de cintrage (24) détermine une trajectoire de correction autour de l'objet détecté en direction de la position de consigne, afin d'obtenir un déplacement sans collision et
- le dispositif d'actionnement (28) est positionné au niveau de la position de consigne.

2. Procédé selon la revendication 1, **caractérisé en ce que**, directement sur le dispositif d'actionnement (28), est prévue une unité d'entrée (41), dans lequel l'unité d'entrée (41) est en liaison de communication avec l'interface de communication (33) et la position de consigne est transmise par l'unité d'entrée (41), via la première interface de communication (33), à l'unité de commande d'actionnement (35) du dispositif d'actionnement (28).

3. Procédé selon la revendication 2, **caractérisé en ce que** l'unité d'entrée (41) comprend au moins un moyen de détection (42) et la position de consigne est détectée par au moins un moyen de détection (42) et est mise à la disposition de l'unité d'entrée (41).

4. Procédé selon la revendication 2 ou 3, **caractérisé en ce que** l'unité d'entrée (41) comprend un moyen d'entrée (43) et la position de consigne est entrée au niveau du moyen d'entrée (43) et mise à la position de l'unité d'entrée (41).

5. Procédé selon l'une des revendications précédentes, **caractérisé en ce qu'**un dispositif de détection (44) détermine une autre position effective d'un opérateur (30) de la machine de cintrage (3) et, sur la base de la position effective déterminée de l'opérateur (30), l'unité de commande de la machine de cintrage (24) calcule la position de consigne pour le dispositif d'actionnement (28) et la position de consigne est transmise de la deuxième interface de communication (34) à la première interface de communication (33).

6. Procédé selon l'une des revendications précédentes, **caractérisé en ce qu'**une unité de signalisation de position (45) est disposée sur un opérateur (30) et l'unité de signalisation de position (45) détermine, sur la base de la position effective actuelle de l'opérateur (30) à l'intérieur de la surface de travail (39), la position de consigne pour le dispositif d'actionnement (28) et la position de consigne est transmise à la première interface de communication (33) du dispositif d'actionnement (28).

7. Procédé selon la revendication 6, **caractérisé en ce que** la position de consigne déterminée est transmise par l'unité de signalisation de position (45) à la première interface de communication (33) du dispositif d'actionnement (28).

8. Procédé selon l'une des revendications précédentes, **caractérisé en ce qu'**une unité de localisation de position (46), avec un premier moyen de localisation (47) sur un opérateur (30) et un deuxième moyen de localisation (48) sur le dispositif d'actionnement (28), est prévue et avant que la position de consigne soit atteinte ou lorsque la position de consigne est atteinte, l'unité d'entrée d'actionnement (31) du dispositif d'actionnement (28) est orientée en direction du premier moyen de localisation de l'opérateur (30).

9. Procédé selon l'une des revendications précédentes, **caractérisé en ce que** la surface de travail (39) pour le dispositif d'actionnement (28) se trouve dans une zone frontale devant la machine de cintrage (3) et les limites de la surface de travail (39) sont enregistrées dans l'unité de commande de la machine de cintrage (24).

10. Procédé selon l'une des revendications précédentes, **caractérisé en ce que** la surface de travail (39) pour le dispositif d'actionnement (28) est définie par un système de coordonnées s'étendant dans la direction X et dans la direction Z.

11. Procédé selon l'une des revendications précédentes, **caractérisé en ce qu'**une limite de la surface de travail (39) est définie par un châssis de machine (7) de la machine de cintrage (3) dans la direction Z dans son extension longitudinale.

12. Procédé selon l'une des revendications précédentes, **caractérisé en ce que** la position de consigne est choisie dans une zone de contour de la tôle ou de la pièce (2) à déformer, qui se trouve dans la zone frontale devant la machine de cintrage (3).

13. Procédé selon l'une des revendications précédentes, **caractérisé en ce que** la trajectoire de consigne (40) entre la position effective et la position de consigne est déterminée comme la ligne de liaison la plus courte en termes de trajet.

14. Procédé selon l'une des revendications précédentes, **caractérisé en ce que** la position effective du dispositif d'actionnement (28) et/ou l'autre position effective de l'opérateur (30) est déterminée en continu ou à des intervalles prédéterminés.

15. Procédé selon l'une des revendications précédentes, **caractérisé en ce qu'**au moins la transmission de signaux et/ou de données est effectuée sans fil entre les interfaces de communication (33, 34) et/ou est effectuée sans fil entre les moyens de localisation (47, 48) de l'unité de localisation de position (46).

16. Procédé selon l'une des revendications précédentes, **caractérisé en ce que**, sur le dispositif d'actionnement (28) est en outre prévue une unité de dépôt (38).

17. Procédé selon la revendication 16, **caractérisé en ce que** l'unité de dépôt (38) peut être déplacée par rapport à un boîtier de base (37) du dispositif d'actionnement (28).
